# EUROPEAN PATENT SPECIFICATION

(11) **EP 2 501 115 B1**
(45) Date of publication and mention of the grant of the patent: **25.12.2013**
(21) Application number: 11188510.9
(22) Date of filing: 09.11.2011
(51) Int. Cl.: H04M 1/725

(54) **Compound electronic device and method for displaying image data**
Zusammengesetzte elektronische Vorrichtung und Verfahren zum Anzeigen von Bilddaten
Dispositif électronique de composé et procédé d'affichage de données d'images

(30) Priority: 15.03.2011 TW 100108678
(43) Date of publication of application: 19.09.2012
(73) Proprietor: Acer Incorporated, Taipei Hsien 221 (TW)
(72) Inventor: Sip, Kim Yeung, 221 Taipei Hsien (TW)
(74) Representative: Michalski Hüttermann & Partner Patentanwälte

(56) References cited:
- US-A1- 2006 088 277
- US-A1- 2007 213 093
- US-A1- 2009 034 209
- US-A1- 2009 189 829

## Description

### CROSS REFERENCE TO RELATED APPLICATIONS

This Application claims priority of Taiwan Patent Application No. 100108678 filed on March 15, 2011.

### BACKGROUND OF THE INVENTION

### Field of the Invention

The disclosure generally relates to a compound electronic device, and more particularly, relates to a compound electronic device which combines a plurality of mobile devices together.

### Description of the Related Art

Personal mobile electronic devices, e.g., mobile phones, tablet PCs, PDA (personal digital assistant), and notebooks, have become a necessity in modem daily life. Personal mobile electronic devices are expected to be compact in size for convenience. However, some personal mobile electronic devices with monitors can not provide large and clear images due to the small size limitations. For instance, a mobile phone can be utilized for playing movies, but a user would prefer viewing movies on a TV or PC, due to the small screen of the mobile phone.
US 2009/189829 A1 describes an information processing apparatus including a main unit having a flat boxed shape, a first display device that displays contents, a connecting portion that is configured to detachably attach and fix the main unit to another apparatus, a connection interface that communicates with the another apparatus and a controller that operates to determine whether the main unit is fixed to the another apparatus by the connecting portion in a manner covering a second display device that is provided in the another apparatus.
US 2006/088277 A1 describes an image/audio playback technology in a mobile communication terminal, whereby a single image is divided into two halves, i.e., left-half and right-half images, which are displayed on two mobile communication terminals, respectively.
US 2007/213093 A1 describes a mobile terminal having a wide viewing function of a digital broadcasting that includes a digital broadcasting receiver for receiving digital broadcasting signals, an image splitter for splitting a digital broadcasting image according to a rotating direction of a display unit, a rotation detector for detecting the rotating direction of the display unit and a controller for controlling the image splitter for splitting the received digital broadcasting image according to the detected rotating direction of the display unit, and displaying the split images. US 2009/034209 A1 describes a multi-module combination type portable electronic device includes a display module having a display unit to display an image, a control module having a plurality of buttons, and a connection unit to connect the display module and the control module, thereby transmitting a data signal and power from the control module to the display module, and thus, enabling use in a plurality of modes according to a combination position of the display module and the control module.

The invention objects to provide a compound electronic device which quickly combines a plurality of mobile devices together.

### BRIEF SUMMARY OF THE INVENTION

In one exemplary embodiment, the disclosure is directed to a compound electronic device, comprising: a first mobile device, comprising: a first electromagnet, generating a first magnetic pole; and a first monitor; a second mobile device, comprising: a sensor, detecting the first magnetic pole, and generating an enable signal according to the first magnetic pole; a second electromagnetic, generating a second magnetic pole opposite to the first magnetic pole according to the enable signal; and a second monitor, wherein the first mobile device is coupled to the second mobile device via attraction of the first and second magnetic poles.

In another exemplary embodiment, the disclosure is directed to an image displaying method, comprising the steps of: generating a first magnetic pole via a first mobile device; detecting the first magnetic pole and generating an enable signal according to the first magnetic pole via a second mobile device; and generating a second magnetic pole opposite to the first magnetic pole according to the enable signal via the second mobile device, wherein the first mobile device is coupled to the second mobile device via attraction of the first and second magnetic poles in order to display image data together.

### BRIEF DESCRIPTION OF DRAWINGS

The invention can be more fully understood by reading the subsequent detailed description and examples with references made to the accompanying drawings, wherein:

FIG. 1 is a diagram illustrating a compound electronic device according to an embodiment of the invention;

FIG. 2 is a diagram illustrating displaying an image data together according to an embodiment of the invention;

FIG. 3 is a diagram illustrating a compound electronic device according to an embodiment of the invention;

FIG. 4 is a diagram illustrating a compound electronic device according to an embodiment of the invention;

FIG. 5 is a diagram illustrating a compound electronic device according to an embodiment of the invention;

FIG. 6 is a diagram illustrating a compound electronic device according to an embodiment of the invention;

FIG. 7 is a diagram illustrating a compound electronic device according to an embodiment of the invention;

FIG. 8A is a diagram illustrating a compound electronic device according to an embodiment of the invention;

FIG. 8B is a diagram illustrating a compound electronic device according to an embodiment of the invention;

FIG. 9 is a flow chart illustrating an image displaying method according to an embodiment of the invention.

### DETAILED DESCRIPTION OF THE INVENTION

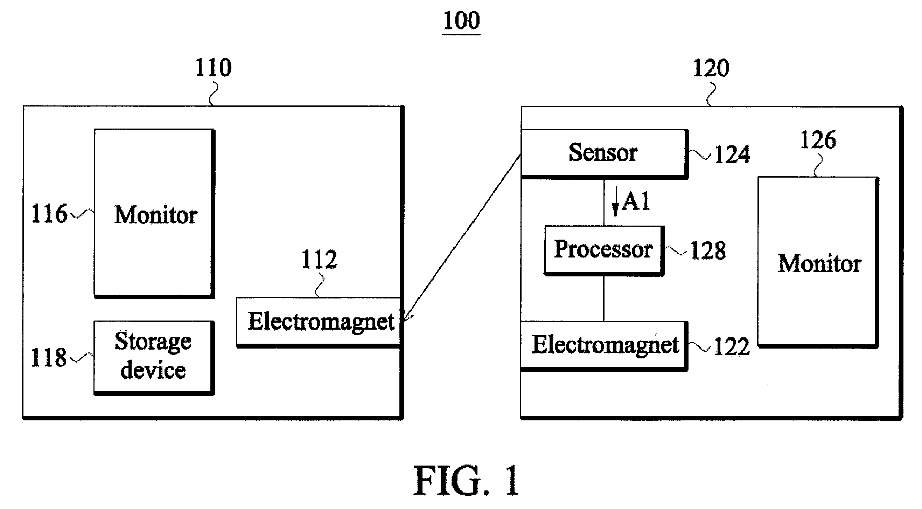

FIG. 1 is a diagram illustrating a compound electronic device 100 according to an embodiment of the invention. As shown in FIG. 1, the compound electronic device 100 comprises mobile devices 110, 120 that may be mobile phones, tablet PCs, PDAs, notebooks, or other portable electronic devices with monitors. The mobile device 110 may comprise: an electromagnet 112, a monitor 116, and a storage device 118. The mobile device 120 may comprise: an electromagnet 122, a sensor 124, a monitor 126, and a processor 128. The processor 128 is coupled to the sensor 124 and the electromagnet 122. The electromagnets 112, 122 may consist of coils and an iron core, or only coils. The sensor 124 may be a hall sensor to detect nearby magnetic poles or magnetic fields. The monitors 116, 126 may be LCD (liquid crystal display) monitors. The storage device 118 may be a memory, a hard disc, or DVD

To begin, the electromagnet 112 of the mobile device 110 generates a first magnetic pole, N pole or S pole. It is noted that an electromagnetic must generate two magnetic poles at two ends concurrently, and the first magnetic pole means a magnetic pole of the electromagnet 112 that generates a magnetic field toward the outside of the mobile device 110. When a distance between the mobile devices 110, 120 is shorter than a predetermined distance, the sensor 124 can detect near by magnetic fields, determine whether the first magnetic pole is an N pole or S pole, and generate an enable signal A1 according to the detection. The processor 128 of the mobile device 120 can determine a current direction of the electromagnet 122 to generate a second magnetic pole opposite to the first magnetic pole according to the enable signal A1. For example, if the first magnetic pole is an N pole, the second magnetic pole is an S pole; and if the first magnetic pole is an S pole, the second magnetic pole is an N pole. Finally, the electromagnets 112, 122 attract each other due to being opposite magnetic poles, and the mobile device 110 is coupled to the mobile device 120 via attraction of the electromagnets 112, 122. When the mobile device 110 is coupled to the mobile device 120, each of the mobile devices 110, 120 generates a vibration alert to inform a user. Although only the sensor 124 of the mobile device 120 detects nearby magnetic fields as shown in FIG. 1, the mobile device 110 can also comprise another sensor and processor and be coupled to the mobile device 120 in the same way. The mobile devices 110, 120 can share data, e.g., video or music files, wirelessly via Bluetooth or Wi-Fi connection.

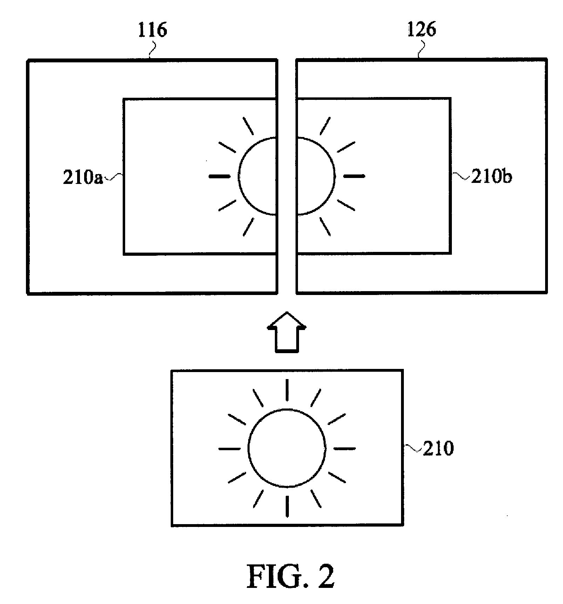

FIG. 2 is a diagram illustrating displaying an image data together according to an embodiment of the invention. The storage device 118 is configured to store image data 210. Each of mobile devices 110, 120 may comprise an application program. The mobile devices 110, 120 may share the image data 210 wirelessly via the application programs concurrently. The image data 210 may be a movie, a TV program, or a picture. As shown in FIG. 2, the image data can be divided up into sub-images 210a, 210b. When the mobile device 110 is coupled to the mobile device 120, each of the monitors 116, 126 may display part of the image data 210, e.g., the monitors 116, 126 display sub-images 210a, 210b, respectively, to constitute a complete image data 210. Although there are only two mobile devices as shown in FIG. 2, the compound electronic device 100 may comprise 4, 9, or more mobile devices that display one image data together via attraction of the electromagnets.

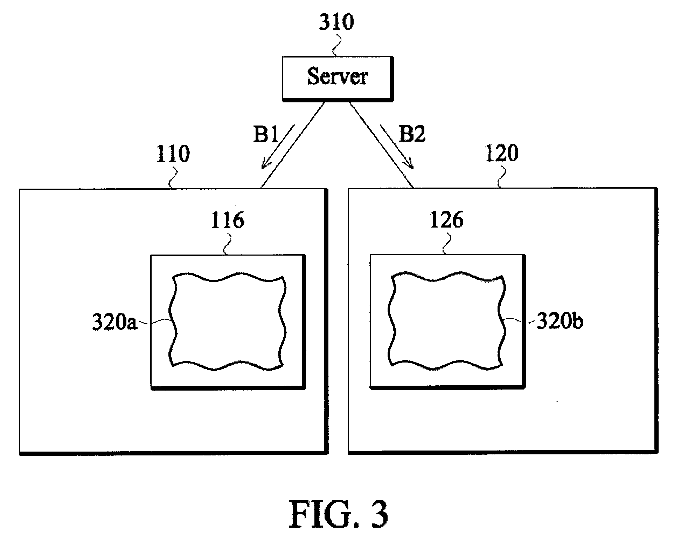

FIG. 3 is a diagram illustrating a compound electronic device according to an embodiment of the invention. As shown in FIG. 3, a server 310 of an online game is coupled to the mobile devices 110, 120 in a wired or wireless way, and transmits commands B1, B2 to the mobile devices 110, 120, respectively. After connection, the monitor 116 of the mobile device 110 and the monitor 126 of the mobile device 120 may display frames 320a, 320b of the online game according to the commands B1, B2, respectively. For example, the frame 320a is a background, and the frame 320b is a map thumbnail of the online game. In another embodiment, the frames 320a, 320b may be combined to constitute another background of the online game. Through connection of the mobile devices 110, 112, a player can have a larger screen to play the online game.

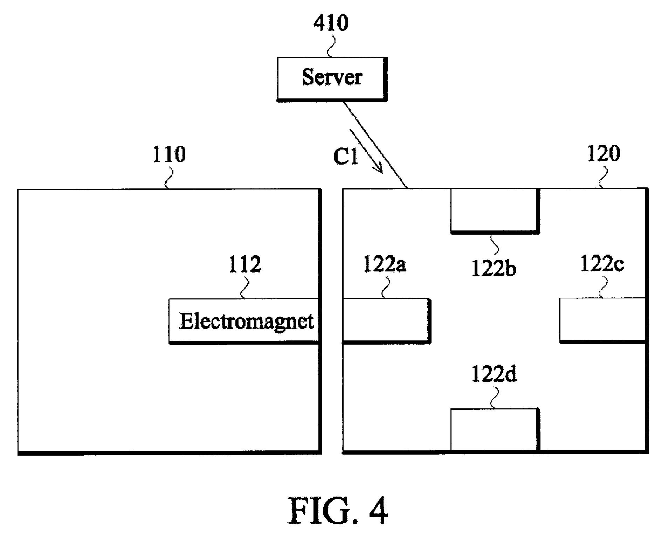

FIG. 4 is a diagram illustrating a compound electronic device according to an embodiment of the invention. As shown in FIG. 4, a server 410 is coupled to the mobile device 120 in a wired or wireless way, and transmits a control command C1. The electromagnet 122 of the mobile device 120 may comprise a plurality of the sub-electromagnets 122a, 122b, 122c, 122d that are disposed on four sides of the mobile device 120, respectively. Although there are only 4 sub-electromagnets disposed on the 4 sides as shown in FIG. 4, there may be different number of the sub-electromagnets, e.g., 2 sub-electromagnets disposed on 2 sides of the mobile device 120, respectively. During the connection, the mobile device 120 may receive the control command C1 and select one of the plurality of sub-electromagnets according to the control command C 1 in order to attract the electromagnet 112 of the mobile device 110. For example, if the control command C1 indicates the sub-electromagnet 122a, the processor (not shown) of the mobile device 120 will command the sub-electromagnet 122a to generate a second magnetic pole with a polarity that is opposite to a polarity of a first magnetic pole of the electromagnet 112. The other sub-electromagnets 122b, 122c, 122d can have no power and can be non-magnetic. Therefore, the mobile device 120 can be coupled to the electromagnet 112 of the mobile device 110 through the sub-electromagnet 122a selected by the server 410.

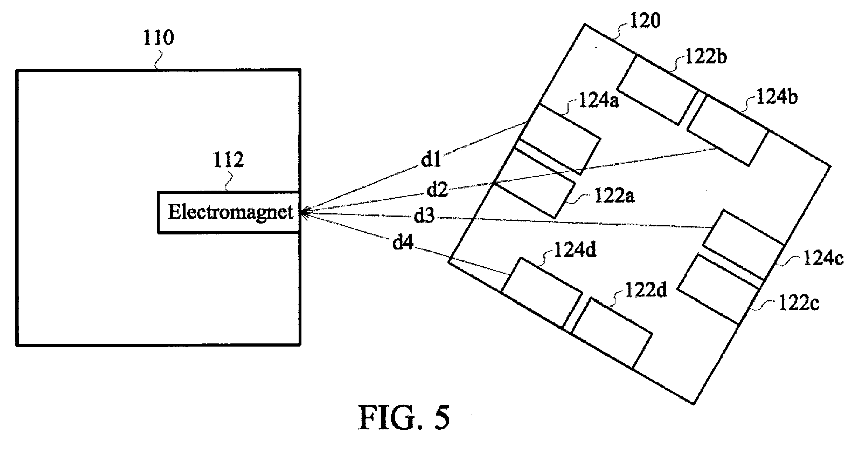

FIG. 5 is a diagram illustrating a compound electronic device according to an embodiment of the invention. As shown in FIG. 5, the electromagnet 122 of the mobile device 120 may comprise a plurality of the sub-electromagnets 122a, 122b, 122c, 122d that are disposed on four sides of the mobile device 120, respectively. Although there are only 4 sub-electromagnets disposed on the 4 sides as shown in FIG. 5, there may be different number of the sub-electromagnets, e.g., 2 sub-electromagnets disposed on 2 sides of the mobile device 120, respectively. The sensor 124 of the mobile device 120 may comprise a plurality of sub-sensors 124a, 124b, 124c, 124d that are disposed on four sides of the mobile device 120, respectively. Although there are only 4 sub-sensors disposed on the 4 sides as shown in FIG. 5, there may be different number of sub-sensors, e.g., 2 sub-sensors disposed on 2 sides of the mobile device 120, respectively. The sub-sensors 124a, 124b, 124c, 124d detect distances d1, d2, d3, d4 between the electromagnet 112 and the sub-electromagnets 122a, 122b, 122c, 122d, respectively. The processor (not shown) of the mobile device 120 may determine which one is the shortest among distances d1, d2, d3, d4 and select one of the sub-electromagnets 122a, 122b, 122c, 122d that has the shortest distance of all detected distances d1, d2, d3, d4. For example, if the processor determines that the distance d1 is the shortest, it will command the sub-electromagnet 122a to generate a second magnetic pole with a polarity that is opposite to a polarity of a first magnetic pole of the electromagnet 112. The other sub-electromagnets 122b, 122c, 122d can have no power and can be non-magnetic. Therefore, the mobile device 120 can be coupled to the electromagnet 112 of the mobile device 110 through the nearest sub-electromagnet 122a.

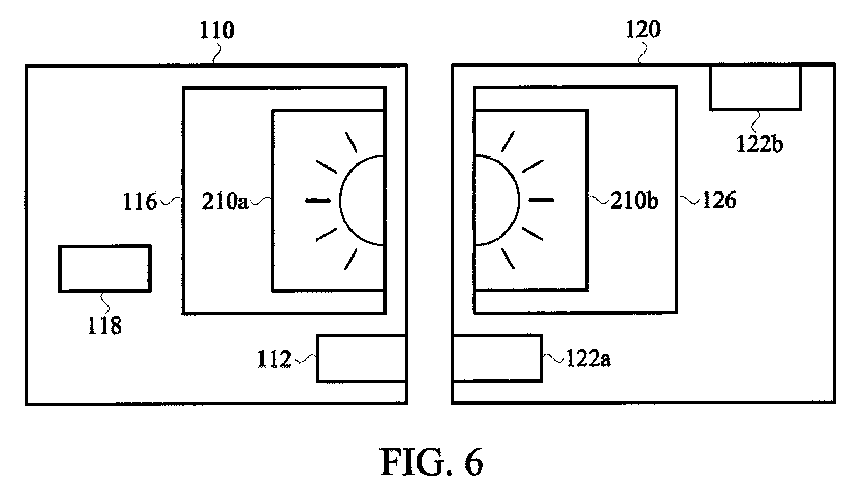

FIG. 6 is a diagram illustrating a compound electronic device according to an embodiment of the invention. As shown in FIG. 6, the electromagnet 122 of the mobile device 120 may comprise a plurality of the sub-electromagnets 122a, 122b that are disposed on two sides of the mobile device 120, respectively. Although there are only 2 sub-electromagnets disposed on the 2 sides as shown in FIG. 6, there may be different number of the sub-electromagnets, e.g., 4 sub-electromagnets disposed on 4 sides of the mobile device 120, respectively. The storage device 118 of the mobile device 110 is configured to store image data 210. Each of the mobile devices comprises an application program. Through wireless connection and the application program, the mobile devices 110, 120 may share the image data 210. The image data 210 may be a movie, a TV program, or a picture. The image data 210 may be divided up into sub-images 210a, 210b. To begin, the mobile device 110 is coupled to the mobile device 120, and both display the image data 210 together. Next, the mobile devices 110, 120 are separated from each other, and each of the monitors 116, 126 displays a part of the image data 210, e.g., the monitor 116 displays the sub-image 210a, and the monitor 126 displays the sub-image 210b. If a user wants to combine the mobile devices 110, 120 that are displaying different sub-images, a processor (not shown) of the mobile device 120 will select one of the sub-electromagnets 122a, 122b to be coupled to the electromagnet 112 of the mobile device 110 in order to combine the sub-images 210a, 210b into the complete data image 210. For example, the processor of the mobile device 120 must command the sub-electromagnet 122a to generate a second magnetic pole with a polarity that is opposite to a polarity of a first magnetic pole of the electromagnet 112. The other sub-electromagnet 122b can have no power and can be non-magnetic. Therefore, a wrong combination of mobile devices and a wrong display can be avoided.

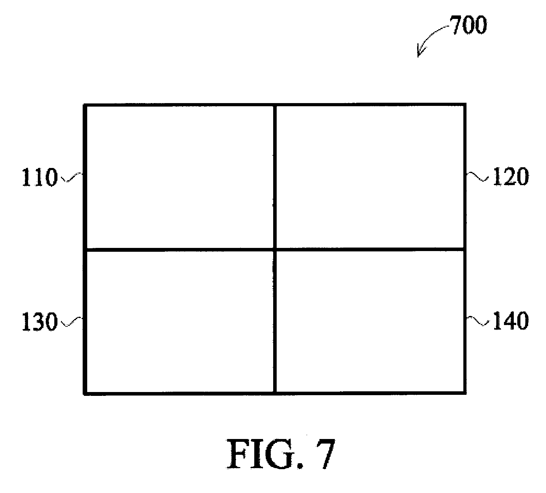

FIG. 7 is a diagram illustrating a compound electronic device according to an embodiment of the invention. As shown in FIG. 7, the mobile devices 110, 120, 130, 140 are combined into a compound electronic device 700 via attraction of the sub-electromagnets disposed on four sides of each of the mobile devices 110, 120, 130, 140. Although there are only 4 mobile devices combined as shown in FIG.7, there may be 6, 8, 9, or more mobile devices combined into one compound electronic device shaped like a rectangular.

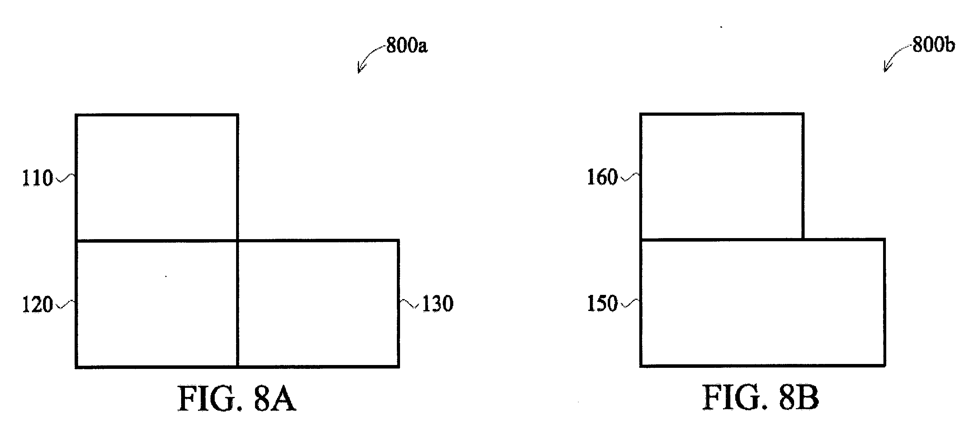

FIG. 8A is a diagram illustrating a compound electronic device according to an embodiment of the invention. As shown in FIG. 8A, the mobile devices 110, 120, 130 are combined into a compound electronic device 800a via attraction of the sub-electromagnets disposed on four sides of each of the mobile devices 110, 120, 130. Although there are only 3 mobile devices combined as shown in FIG. 8, there may be 3, 5, 7, or more mobile devices combined into one compound electronic device shaped like a non-rectangle.

FIG. 8B is a diagram illustrating a compound electronic device according to an embodiment of the invention. As shown in FIG. 8B, the mobile devices 150, 160 having different sizes can be combined into a compound electronic device 800b via attraction of the sub-electromagnets disposed on four sides of each of the mobile devices 150, 160.

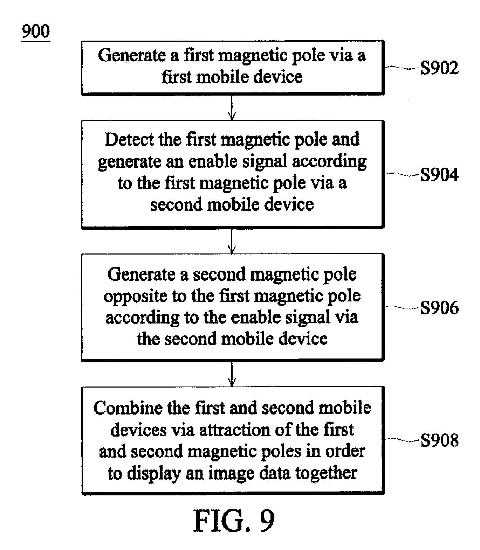

FIG. 9 is a flow chart 900 illustrating an image displaying method according to an embodiment of the invention. To begin, in step S902, a first magnetic pole via a first mobile device is generated. In step S904, the first magnetic pole is detected and an enable signal is generated according to the first magnetic pole via a second mobile device. In step S906, a second magnetic pole opposite to the first magnetic pole is generated according to the enable signal via the second mobile device. Finally, in step S908, the first and second mobile devices are combined via attraction of the first and second magnetic poles in order to display image data together, to end the flow chart.. The way to display the image data is shown in FIG. 2, 3, and 6.

In prior art, permanent magnets are usually utilized which combines a plurality of apparatuses. According to the invention, polarity of an electromagnet can be adjusted in order to combine a plurality of mobile devices easily. Moreover, the sensor can reduce power consumption of the plurality of electromagnets.

It will be apparent to those skilled in the art that various modifications and variations can be made in the invention. It is intended that the standard and examples be considered as exemplary only, with a true scope of the disclosed embodiments being indicated by the following claims and their equivalents.

## Claims

1. A compound electronic device (100), comprising:
a first mobile device (110), comprising:
a first electromagnet (112), arranged for generating a first magnetic pole; and
a first monitor (116); and
a second mobile device (120), comprising:
a sensor (124), arranged for detecting the first magnetic pole, and generating an enable signal according to the first magnetic pole;
a second electromagnet (122), arranged for generating a second magnetic pole opposite to the first magnetic pole according to the enable signal; and
a second monitor (126),
wherein the first mobile device (110) is coupled to the second mobile device (120) via attraction of the first and second magnetic poles.

2. The compound electronic device (100) as claimed in claim 1, wherein when the first mobile device (110) is coupled to the second mobile device (120), each of the first and second mobile devices (110, 120) generates a vibration alert.

3. The compound electronic device (100) as claimed in claim 1, wherein when the first mobile device (110) is coupled to the second mobile device (120), the first monitor (116) is arranged for displaying a first sub-image (210a) of an image data (210), the second monitor (126) is arranged for displaying a second sub-image (210b) of the image data (210), and the first and second sub-images (210a, 210b) constitute the complete image data (210).

4. The compound electronic device (100) as claimed in claim 3, wherein each of the first and second mobile device (110, 120) comprises an application program, and shares the image data (210) via the application program.

5. The compound electronic device (100) as claimed in claim 1, wherein:
the first mobile device (110) receives a first command from a server (310), and the second mobile device (120) receives a second command from the server (310);
the first monitor (116) is arranged for displaying a first frame (320a) of an online game according to the first command; and
the second monitor (126) is arranged for displaying a second frame (320b) of the online game according to the second command.

6. The compound electronic device (100) as claimed in claim 1, wherein:
the second electromagnet (122) comprises a plurality of sub-electromagnets (122a, 122b, 122c, 122d), and each of which is disposed on each of sides of the second mobile device (120); and
the second mobile device (120) is arranged for determining a polarity of one of the plurality of sub-electromagnets (122a, 122b, 122c, 122d) according to a control command from a server (310) in order to attract the first electromagnet (112).

7. The compound electronic device (100) as claimed in claim 1, wherein:
the second electromagnet (122) comprises a plurality of sub-electromagnets (122a, 122b, 122c, 122d), and each of which is disposed on each of sides of the second mobile device (120);
the sensor (124) comprises a plurality of sub-sensors (124), each of which is disposed on each of the sides of the second mobile device (120) and configured to detect a distance between each of the plurality of sub-electromagnets (122a, 122b, 122c, 122d) and the first electromagnet (112); and
the second mobile device (120) is arranged for determining the polarity of one of the plurality of sub-electromagnets (122a, 122b, 122c, 122d) that has the shortest detected distance (d1, d2, d3, d4) in order to attract the first electromagnet (112).

8. The compound electronic device (100) as claimed in claim 1, wherein:
the second electromagnet (122) comprises a plurality of sub-electromagnets (122a, 122b, 122c, 122d), and each of which is disposed on each of sides of the second mobile device (120);
the first monitor (116) is arranged for displaying a first sub-image (210a) of an image data (210);
the second monitor (126) is arranged for displaying a second sub-image (210b) of the image data (210); and
the second mobile device (120) is arranged for determining a polarity of one of the plurality of sub-electromagnets (122a, 122b, 122c, 122d) according to the first and second sub-images (210a, 210b) in order to attract the first electromagnet (112) and combine the first and second sub-image (210a, 210b) into the complete image data (210).

9. An image displaying method, comprising the steps of:
generating a first magnetic pole via a first mobile device (110);
detecting the first magnetic pole and generating an enable signal according to the first magnetic pole via a second mobile device (120);
generating a second magnetic pole opposite to the first magnetic pole according to the enable signal via the second mobile device (120); and
combining the first and second mobile devices (110, 120) via attraction of the first and second magnetic poles in order to display image data (210) together.

10. The image displaying method as claimed in claim 9, wherein when the first and second mobile device (110, 120) are combined together, each of the first and second mobile device (110, 120) generates a vibration alert.

11. The image displaying method as claimed in claim 9, wherein when the first and second mobile device (110, 120) are combined together, the method further comprises:
displaying a first sub-image (210a) of an image data (210) via the first mobile device (110); and
displaying a second sub-image (210b) of the image data (210) via the second mobile device (120),
wherein the first and second sub-image (210a, 210b) constitute the complete image data (210).

12. The image displaying method as claimed in claim 9, further comprising the steps of:
receiving a first command and a second command via the first and second mobile devices (110, 120), respectively, from a server (310);
displaying a first frame (320a) of an online game according to the first command via the first mobile device (110); and
displaying a second frame (320b) of the online game according to the second command via the second mobile device (120).

13. The compound electronic device (100) as claimed in claim 5 or the image displaying method as claimed in claim 12, wherein the first frame (320a) is a background of the online game, and the second frame (320b) is a map thumbnail of the online game.

14. The image displaying method as claimed in claim 9, wherein the second mobile device (120) comprises a plurality of the sub-electromagnets (122a, 122b, 122c, 122d), each of which is disposed on each side of the second mobile device (120), and the image displaying method further comprises the steps of:
detecting, via the second mobile device (120), a distance (d1, d2, d3, d4) between each of the plurality of the sub-electromagnets (122a, 122b, 122c, 122d) and the first electromagnet (112); and
determining, via the second mobile device (120), the polarity of one of the plurality of the sub-electromagnets (122a, 122b, 122c, 122d) that has the shortest detected distance (d1, d2, d3, d4) in order for connection to the first mobile device (110).

15. The image displaying method as claimed in claim 9, wherein the second mobile device (120) comprises a plurality of the sub-electromagnets, each of which is disposed on each side of the second mobile device (120), and the image displaying method further comprises the steps of:
displaying a first sub-image (210a) of the image data (210) via the first mobile device (110); and
displaying a second sub-image (210b) of the image data (210) via the second mobile device (120),
wherein the second mobile device (120) determines the polarity of one of the plurality of the sub-electromagnets according to the first and second sub-image (210a, 210b) in order for connection to the first mobile device (110) and combines the first and second sub-image (210a, 210b) into the complete image data (210).

## Patentansprüche

1. Kombiniertes elektronisches Gerät (100) mit:
einem ersten Mobilgerät (110) mit:
einem ersten Elektromagnet (112), der dafür konfiguriert ist, einen ersten Magnetpol zu erzeugen; und
einem ersten Bildschirm (116); und
einem zweiten Mobilgerät (120) mit:
einem Sensor (124), der dafür konfiguriert ist, den ersten Magnetpol zu erfassen und gemäß dem erfassten ersten Magnetpol ein Freigabesignal zu erzeugen;
einem zweiten Elektromagnet (122), der dafür konfiguriert ist, gemäß dem Freigabesignal einen dem ersten Magnetpol entgegengesetzten zweiten Magnetpol zu erzeugen; und
einem zweiten Bildschirm (126),
wobei das erste Mobilgerät (110) durch eine Anziehungskraft zwischen dem ersten und dem zweiten Magnetpol mit dem zweiten Mobilgerät (120) verbunden wird.

2. Kombiniertes elektronisches Gerät (100) nach Anspruch 1, wobei, wenn das erste Mobilgerät (110) mit dem zweiten Mobilgerät (120) verbunden ist, das erste und das zweite Mobilgerät (110, 120) jeweils einen Vibrationsalarm erzeugen.

3. Kombiniertes elektronisches Gerät (100) nach Anspruch 1, wobei, wenn das erste Mobilgerät (110) mit dem zweiten Mobilgerät (120) verbunden ist, der erste Bildschirm (116) dafür konfiguriert ist, ein erstes Teilbild (210a) von Bilddaten (210) darzustellen, der zweite Bildschirm (126) dafür konfiguriert ist, ein zweites Teilbild (210b) der Bilddaten (210) darzustellen, und das erste und das zweite Teilbild (210a, 210b) die vollständigen Bilddaten (210) bilden.

4. Kombiniertes elektronisches Gerät (100) nach Anspruch 3, wobei das erste und das zweite Mobilgerät (110, 120) jeweils ein Anwendungsprogramm aufweisen und die Bilddaten (210) über das Anwendungsprogramm gemeinsam nutzen.

5. Kombiniertes elektronisches Gerät (100) nach Anspruch 1, wobei:
das erste Mobilgerät (110) einen ersten Befehl von einem Server (310) empfängt und das zweite Mobilgerät (120) einen zweiten Befehl vom Server (310) empfängt,
der erste Bildschirm (116) dafür konfiguriert ist, gemäß dem ersten Befehl einen ersten Rahmen (320a) eines Online-Spiels darzustellen, und
der zweite Bildschirm (126) dafür konfiguriert ist, gemäß dem zweiten Befehl einen zweiten Rahmen (320b) darzustellen.

6. Kombiniertes elektronisches Gerät (100) nach Anspruch 1, wobei:
der zweite Elektromagnet (122) mehrere Teil-Elektromagnete (122a, 122b, 122c, 122d) aufweist, die auf einer jeweiligen Seite des zweiten Mobilgeräts (120) angeordnet sind, und
wobei das zweite Mobilgerät (120) dafür konfiguriert ist, gemäß einem Steuerbefehl von einem Server (310) eine Polarität eines der mehreren Teil-Elektromagnete (122a, 122b, 122c, 122d) zu bestimmen, um den ersten Elektromagnet (112) anzuziehen.

7. Kombiniertes elektronisches Gerät (100) nach Anspruch 1, wobei:
der zweite Elektromagnet (122) mehrere Teil-Elektromagnete (122a, 122b, 122c, 122d) aufweist, die auf einer jeweiligen Seite des zweiten Mobilgeräts (120) angeordnet sind,
der Sensor (124) mehrere Teil-Sensoren (124) aufweist, die auf einer jeweiligen Seite des zweiten Mobilgeräts (120) angeordnet und dafür konfiguriert sind, einen Abstand zwischen jedem der mehreren Teil-Elektromagnete (122a, 122b, 122c, 122d) und dem ersten Elektromagnet (112) zu erfassen, und
das zweite Mobilgerät (120) dafür konfiguriert ist, die Polarität eines der mehreren Teil-Elektromagnete (122a, 122b, 122c, 122d), der den kürzesten erfassten Abstand (d1, d2, d3, d4) hat, zu erfassen, um den ersten Elektromagnet (112) anzuziehen.

8. Kombiniertes elektronisches Gerät (100) nach Anspruch 1, wobei:
der zweite Elektromagnet (122) mehrere Teil-Elektromagnete (122a, 122b, 122c, 122d) aufweist, die auf einer jeweiligen Seite des zweiten Mobilgeräts (120) angeordnet sind,
der erste Bildschirm (116) dafür konfiguriert ist, ein erstes Teilbild (210a) von Bilddaten (210) darzustellen,
der zweite Bildschirm (126) dafür konfiguriert ist, ein zweites Teilbild (210b) der Bilddaten (210) darzustellen, und
das zweite Mobilgerät (120) dafür konfiguriert ist, eine Polarität eines der mehreren Teil-Elektromagnete (122a, 122b, 122c, 122d) gemäß dem ersten und dem zweiten Teilbild (210a, 210b) zu bestimmen, um den ersten Elektromagnet (112) anzuziehen, und das erste und das zweite Teilbild (210a, 210b) zu den vollständigen Bilddaten (210) zu kombinieren.

9. Bilddarstellungsverfahren mit den Schritten:
Erzeugen eines ersten Magnetpols durch ein erstes Mobilgerät (110);
Erfassen des ersten Magnetpols und Erzeugen eines Freigabesignals gemäß dem ersten Magnetpol durch ein zweites Mobilgerät (120);
Erzeugen eines dem ersten Magnetpol entgegengesetzten zweiten Magnetpols gemäß dem Freigabesignal durch das zweite Mobilgerät (120); und
Kombinieren des ersten und des zweiten Mobilgeräts (110, 120) durch eine Anziehungskraft zwischen dem ersten und dem zweiten Magnetpol, um Bilddaten (120) zusammen darzustellen.

10. Bilddarstellungsverfahren nach Anspruch 9, wobei, wenn das erste und das zweite Mobilgerät (110, 120) miteinander kombiniert sind, das erste und das zweite Mobilgerät (110, 120) jeweils einen Vibrationsalarm erzeugen.

11. Bilddarstellungsverfahren nach Anspruch 9, wobei, wenn das erste und das zweite Mobilgerät (110, 120) miteinander kombiniert sind, das Verfahren ferner die Schritte aufweist:
Darstellen eines ersten Teilbildes (210a) von Bilddaten (210) durch das erste Mobilgerät (110); und
Darstellen eines zweiten Teilbildes (210b) der Bilddaten (210) durch das zweite Mobilgerät (120),
wobei das erste und das zweite Teilbild (210a, 210b) die vollständigen Bilddaten (210) bilden.

12. Bilddarstellungsverfahren nach Anspruch 9, ferner mit den Schritten:
Empfangen eines ersten Befehls und eines zweiten Befehls von einem Server (310) über das erste bzw. das zweite Mobilgerät (110, 120);
Darstellen eines ersten Rahmens (320a) eines Online-Spiels gemäß dem ersten Befehl durch das erste Mobilgerät (110); und
Darstellen eines zweiten Rahmens (320b) des Online-Spiels gemäß dem zweiten Befehl durch das zweite Mobilgerät (120).

13. Kombiniertes elektronisches Gerät (100) nach Anspruch 5 oder Bilddarstellungsverfahren nach Anspruch 12, wobei der erste Rahmen (320a) ein Hintergrund des Online-Spiels und der zweite Rahmen (320b) ein Kartenminiaturbild des Online-Spiels ist.

14. Bilddarstellungsverfahren nach Anspruch 9, wobei das zweite Mobilgerät (120) mehrere Teil-Elektromagnete (122a, 122b, 122c, 122d) aufweist, die auf einer jeweiligen Seite des zweiten Mobilgeräts (120) angeordnet sind, und wobei das Bilddarstellungsverfahren ferner die Schritte aufweist:
Erfassen eines Abstands (d1, d2, d3, d4) zwischen jedem der mehreren Teil-Elektromagnete (122a, 122b, 122c, 122d) und dem ersten Elektromagnet (112) durch das zweite Mobilgerät (120); und
Bestimmen der Polarität eines der mehreren Teil-Elektromagnete (122a, 122b, 122c, 122d), der den kürzesten Abstand (d1, d2, d3, d4) hat, durch das zweite Mobilgerät (120) für eine Verbindung mit dem ersten Mobilgerät (110).

15. Bilddarstellungsverfahren nach Anspruch 9, wobei das zweite Mobilgerät (120) mehrere Teil-Elektromagnete aufweist, die auf einer jeweiligen Seite des zweiten Mobilgeräts (120) angeordnet sind, und wobei das Bilddarstellungsverfahren ferner die Schritte aufweist:
Darstellen eines ersten Teilbildes (210a) der Bilddaten (210) durch das erste Mobilgerät (110); und
Darstellen eines zweiten Teilbildes (210b) der Bilddaten (210) durch das zweite Mobilgerät (120),
wobei das zweite Mobilgerät (120) die Polarität eines der mehreren Teil-Elektromagnete gemäß dem ersten und dem zweiten Teilbild (210a, 210b) für eine Verbindung mit dem ersten Mobilgerät (110) bestimmt und das erste und das zweite Teilbild (210a, 210) zu den vollständigen Bilddaten (210) kombiniert.

## Revendications

**1.** Dispositif électronique de composant (100), comprenant :
un premier dispositif mobile (110) comprenant :
un premier électroaimant (112) conçu pour générer un premier pôle magnétique ; et
un premier moniteur (116) ; et
un deuxième dispositif mobile (120) comprenant :
un capteur (124) conçu pour détecter le premier pôle magnétique et pour générer un signal de validation en fonction du premier pôle magnétique ;
un deuxième électroaimant (122) conçu pour générer un deuxième pôle magnétique opposé au premier pôle magnétique en fonction du signal de validation ; et
un deuxième moniteur (126),
dans lequel le premier dispositif mobile (110) est accouplé au deuxième dispositif mobile (120) par l'attraction des premier et deuxième pôles magnétiques.

**2.** Dispositif électronique de composant (100) selon la revendication 1, dans lequel, lorsque le premier dispositif mobile (110) est accouplé au deuxième dispositif mobile (120), chacun parmi les premier et deuxième dispositifs mobiles (110, 120) génèrent une alerte par vibration.

**3.** Dispositif électronique de composant (100) selon la revendication 1, dans lequel, lorsque le premier dispositif mobile (110) est accouplé au deuxième dispositif mobile (120), le premier moniteur (116) est conçu pour afficher une première sous-image (210a) d'une donnée d'image (210), le deuxième moniteur (126) est conçu pour afficher une deuxième sous-image (210b) de la donnée d'image (210), et les première et deuxième sous-images (210a, 210b) constituent la donnée d'image complète (210).

**4.** Dispositif électronique de composant (100) selon la revendication 3, dans lequel chacun parmi les premier et deuxième dispositifs mobiles (110, 120) comprend un programme d'application et partage les données d'image (210) par le biais du programme d'application.

**5.** Dispositif électronique de composant (100) selon la revendication 1, dans lequel :
le premier dispositif mobile (110) reçoit une première commande d'un serveur (310), et le deuxième dispositif mobile (120) reçoit une deuxième commande d'un serveur (310) ;
le premier moniteur (116) est conçu pour afficher un premier cadre (320a) d'un jeu en ligne en fonction de la première commande ; et
le deuxième moniteur (126) est conçu pour afficher un deuxième cadre (320b) du jeu en ligne en fonction de la deuxième commande.

**6.** Dispositif électronique de composant (100) selon la revendication 1, dans lequel :
le deuxième électroaimant (122) comprend une pluralité de sous-électroaimants (122a, 122b, 122c, 122d), parmi lesquels chacun est disposé de chaque côté du deuxième dispositif mobile (120) ; et
le deuxième dispositif mobile (120) est conçu pour déterminer une polarité de l'un parmi la pluralité de sous-électroaimants (122a, 122b, 122c, 122d) en fonction d'une commande de contrôle d'un serveur (310) afin d'attirer le premier électroaimant (112).

**7.** Dispositif électronique de composant (100) selon la revendication 1, dans lequel :
le deuxième électroaimant (122) comprend une pluralité de sous-électroaimants (122a, 122b, 122c, 122d) et chacun d'entre eux est disposé de chaque côté du deuxième dispositif mobile (120) ;
le capteur (124) comprend une pluralité de sous-capteurs (124), parmi lesquels chacun est disposé de chaque côté du deuxième dispositif mobile (120) et configuré pour détecter une distance entre chacun parmi la pluralité de sous-électroaimants (122a, 122b, 122c, 122d) et le premier électroaimant (112) ; et
le deuxième dispositif mobile (120) est conçu pour déterminer la polarité de l'un parmi la pluralité de sous-électroaimants (122a, 122b, 122c, 122d) ayant la plus courte distance détectée (d1, d2, d3, d4) afin d'attirer le premier électroaimant (112).

**8.** Dispositif électronique de composant (100) selon la revendication 1, dans lequel :
le deuxième électroaimant (122) comprend une pluralité de sous-électroaimants (122a, 122b, 122c, 122d) et chacun d'entre eux est disposé de chaque côté du deuxième dispositif mobile (120) ;
le premier moniteur (116) est conçu pour afficher une première sous-image (210a) d'une donnée d'image (210) ;
le deuxième moniteur (126) est conçu pour afficher une deuxième sous-image (210b) de la donnée d'image (210) ; et
le deuxième dispositif mobile (120) est conçu pour déterminer une polarité de l'un parmi la pluralité de sous-électroaimants (122a, 122b, 122c, 122d) en fonction des première et deuxième sous-images (210a, 210b) afin d'attirer le premier électroaimant (112) et de combiner les première et deuxième sous-images (210a, 210b) dans la donnée d'image complète (210).

**9.** Procédé pour l'affichage d'une image, comprenant les étapes suivantes :
génération d'un premier pôle magnétique par le biais d'un premier dispositif mobile (110) ;
détection du premier pôle magnétique et génération d'un signal de validation en fonction du premier pôle magnétique par le biais d'un deuxième dispositif mobile (120) ; et
génération d'un deuxième pôle magnétique opposé au premier pôle magnétique en fonction du signal de validation par le biais du deuxième dispositif mobile (120) ; et
combinaison des premier et deuxième dispositifs mobiles (110, 120) par l'attraction des premier et deuxième pôles magnétiques afin d'afficher la donnée d'image (210) ensemble.

**10.** Procédé pour l'affichage d'une image selon la revendication 9, dans lequel, lorsque les premier et deuxième dispositifs mobiles (110, 120) sont combinés entre eux, le procédé comprend en outre :
l'affichage d'une première sous-image (210a) d'une donnée d'image (210) par le biais du premier dispositif mobile (110) ; et
l'affichage d'une deuxième donnée d'image (210b) de la donnée d'image (210) par le biais du deuxième dispositif mobile (120),
dans lequel les première et deuxième sous-images (210a, 210b) constituent la donnée d'image complète (210).

**12.** Procédé pour l'affichage d'une image selon la revendication 9, comprenant en outre les étapes suivantes :
réception d'une première commande et d'une deuxième commande par le biais des premier et deuxième dispositifs mobiles (110, 120), respectivement, en provenance d'un serveur (310) ;
affichage d'un premier cadre (320a) d'un jeu en ligne en fonction de la première commande, par le biais du premier dispositif mobile (110) ; et
affichage d'un deuxième cadre (320b) du jeu en ligne en fonction de la deuxième commande, par le biais du deuxième dispositif mobile (120).

**13.** Dispositif électronique de composant (100) selon la revendication 5 ou procédé pour l'affichage d'une image selon la revendication 12, dans lesquels le premier cadre (320a) est un arrière-plan du jeu en ligne, et le deuxième cadre (320b) est une vignette de carte du jeu en ligne.

**14.** Procédé pour l'affichage d'une image selon la revendication 9, dans lequel le deuxième dispositif mobile (120) comprend une pluralité de sous-électroaimants (122a, 122b, 122c, 122d), parmi lesquels chacun est disposé de chaque côté du deuxième dispositif mobile (120), et le procédé pour l'affichage d'une image comprend en outre les étapes suivantes :
détection, par le biais du deuxième dispositif mobile (120), d'une distance (d1, d2, d3, d4) entre chacune parmi la pluralité de sous-électroaimants (122a, 122b, 122c, 122d) et le premier électroaimant (112) ; et
détermination, par le biais du deuxième dispositif mobile (120), de la polarité de l'un parmi la pluralité de sous-électroaimants (122a, 122b, 122c, 122d) ayant la plus courte distance (d1, d2, d3, d4) en vue de la connexion au premier dispositif mobile (110).

**15.** Procédé pour l'affichage d'une image selon la revendication 9, dans lequel le deuxième dispositif mobile (120) comprend une pluralité de sous-électroaimants, parmi lesquels chacun est disposé de chaque côté du deuxième dispositif mobile (120), et le procédé pour l'affichage d'une image comprend en outre les étapes suivantes :
affichage d'une première sous-image (210a) de la donnée d'image (210) par le biais du premier dispositif mobile (110) ; et
affichage d'une deuxième sous-image (210b) de la donnée d'image (210) par le biais du deuxième dispositif mobile (120),
dans lequel le deuxième dispositif mobile (120) détermine la polarité de l'un parmi la pluralité de sous-électroaimants en fonction des première et deuxième sous-images (210a, 210b) en vue de la connexion au premier dispositif mobile (110), et combine les première et deuxième sous-images (210a, 210b) dans une donnée d'image complète (210).
